# EUROPÄISCHE PATENTSCHRIFT

(11) **EP 1 337 607 B1**
(45) Veröffentlichungstag und Bekanntmachung des Hinweises auf die Patenterteilung: **07.06.2006**
(21) Anmeldenummer: 01993662.4
(22) Anmeldetag: 08.11.2001
(51) Int. Cl.: C10J 3/66

(54) **VERFAHREN ZUR VERGASUNG VON FLÜSSIGEN BIS PASTÖSEN ORGANISCHEN STOFFEN UND STOFFGEMISCHEN**
METHOD FOR THE GASIFICATION OF LIQUID TO PASTY ORGANIC SUBSTANCES AND SUBSTANCE MIXTURES
PROCEDE DE GAZEIFICATION DE SUBSTANCES ORGANIQUES EN UN ETAT LIQUIDE A PATEUX, ET DE MELANGES DE TELLES SUBSTANCES

(30) Priorität: 08.11.2000 DE 10055360
(43) Veröffentlichungstag der Anmeldung: 27.08.2003
(73) Patentinhaber: Mühlen, Heinz-Jürgen, 45143 Essen (DE); Schmid, Christoph, 51702 Bergneustadt (DE); Sonntag, Dr., Thomas-Michael, 53909 Zülpich (DE)
(72) Erfinder: SCHMID, Christoph, 51702 Bergneustadt (DE); MÜHLEN, Heinz-Jürgen, 48167 Münster (DE)
(74) Vertreter: Behrendt, Arne
(86) Internationale Anmeldenummer: PCT/EP2001/012931
(87) Internationale Veröffentlichungsnummer: WO 2002/038706

(56) Entgegenhaltungen:
- EP-A- 0 012 468
- DE-C- 966 005
- DE-C- 19 755 693
- T. DIMOVA, C. SCHMID, H.-J. MÜHLEN: "Die Gestufte Reformierung - ein neues Verfahren zur Gewinnung von Energie und Wasserstoff aus biogenen Reststoffen" DGMK TAGUNGSBERICHT, Bd. 1, 2000, Seiten 39-46, XP008000527 HAMBURG, DE ISSN: 1433-9013 in der Anmeldung erwähnt
- THOMAS-M. SONNTAG: "Katalytisches Cracken und Vergasen kohlenwasserstoffhaltiger Abfälle - LuxoTherm-Verfahren" DGMK TAGUNGSBERICHT, Bd. 1, 2000, Seiten 57-64, XP008000526 HAMBURG, DE ISSN: 1433-9013 in der Anmeldung erwähnt

## Beschreibung

Die Erfindung betrifft ein Verfahren zur Vergasung von flüssigen bis pastösen organischen Stoffen und Stoffgemischen gemäß dem Oberbegriff des Anspruchs 1.

Aus der PCT-OS WO99/04861 [1] ist ein Verfahren zur Entsorgung flüssiger Reststoffe bekannt, bei dem diese Reststoffe in einen Reaktor eingebracht werden, der eine Schüttschicht aus groben Partikeln eines hochschmelzenden Erdalkalioxids, vorzugsweise Calciumoxid, enthält. Diese Schüttschicht wird auf Temperaturen zwischen 800 und 1.100 °C gehalten. In diesem Temperaturbereich zersetzt sich das organische Material in ein Gas, das hauptsächlich Wasserstoff enthält, weiterhin jedoch auch Kohlenwasserstoffe und andere gasförmige Spezies. Eine einfache Bilanz über die einzelnen eingebrachten chemischen Elemente lehrt bereits, daß dem auf diese Weise zu entsorgenden flüssigen Stoff wenigstens ein Reaktionsmittel wie Wasserdampf hinzugegeben werden muß, damit die Bildung von Ruß - als annähernd reinem Kohlenstoff - sicher unterdrückt werden kann. Eine speziell dieses Verfahren kennzeichnende Problematik besteht darin, daß die gesamte Wärme, die zur Verdampfung und thermischen Zersetzung des Einsatzstoffes benötigt wird, von außen über die Reaktorwände eingebracht werden muß. Im Technikumsmaßstab konnte die Funktionalität dieses Verfahrens mit wasserhaltigen Emulsionen in einer Menge von wenigen Kilogramm pro Stunde bereits nachgewiesen werden [2]. Bei Reststoffmengen, die deutlich größer sind, ist diese Art der Wärmeeinbringung jedoch nicht mehr hinreichend zur Versorgung des Prozesses mit Wärme geeignet, so daß beispielsweise mehrere Reaktoren parallel geschaltet werden müßten, um das Verfahren überhaupt noch ablaufen lassen zu können. Dies ist wirtschaftlich kaum sinnvoll.

Aus der DE-PS 197 55 693 [3] ist ein Verfahren zur Vergasung von organischen Stoffen und Stoffgemischen bekannt, das diese Problematik lösen kann. Bei diesem werden die organischen Stoffe in einem Wanderbettreaktor mit einem feinstückigen, inerten Wärmeträgermedium in Kontakt gebracht, wodurch nach eventueller, teilweiser Verdampfung eine schnelle Pyrolyse stattfindet, bei der die organischen Stoffe einesteils in einen kohlenstoffhaltigen, festen Rückstand, andernteils in ein aus kondensierbaren, flüchtigen und gasförmigen Bestandteilen bestehendes Pyrolysegas umgesetzt werden.

Danach werden der Wärmeträger und der Pyrolysekoks einer Verbrennung zugeführt, in welcher zum einen der kohlenstoffhaltige Rückstand verbrannt, zum anderen das Wärmeträgermedium aufgeheizt wird, bevor es nach Abtrennung von den Verbrennungsrückständen wieder der Pyrolyse zugeführt wird. Dies bedeutet, daß ein Reststoff, der auf solche Weise entsorgt wird, die hierfür erforderliche Wärme über die in ihm enthaltene chemische Energie selbst mitbringt.

Das Pyrolysegas enthält in der Regel noch kondensierbare Rückstände und wird nach Zufügung eines Reaktionsmittels - üblicherweise Wasserdampf - in einer als indirekter Wärmetauscher ausgeführten, zweiten Reaktionszone derart nacherhitzt, daß nach Reaktion ein Produktgas mit hohem Heizwert erhalten wird, wobei die indirekte Beheizung dieses Wärmetauschers durch die Verbrennungsabgase unter deren Abkühlung erfolgt. Die Asche wird nach der Feuerung aus einem Teilstrom des Gemisches aus Wärmeträger und Asche des festen, kohlenstoffhaltigen Rückstandes mechanisch vom Wärmeträger abgetrennt, abgekühlt und ausgeschleust.

Dieses Verfahren weist jedoch einige Aspekte auf, die eine Vorrichtung zur Durchführung dieses Verfahrens aufwendig und teuer machen und sowohl den Betrieb als auch die Verfügbarkeit nachteilig beeinflussen können: Zum ersten wird der Wärmeträger im aufgeheizten Zustand von der Verbrennung zurück in die Pyrolyse gefördert, d.h. bei einer Temperatur weit oberhalb der Pyrolysetemperatur, die mit 550 - 650 °C angegeben wird. Dadurch muß auf werkstofflich und mechanisch besonders aufwendige Förderorgane zurückgegriffen werden. Ferner muß, insoweit der aufgeheizte Wärmeträger noch mit Asche vermischt ist, mit Erweichung der letzteren und damit Verbackungsproblemen gerechnet werden. Zum zweiten erfordert der verwendete, indirekte Wärmetauscher aufgrund seiner Arbeitsbedingungen - beiderseits Temperaturen 500 - 1.000 °C, einerseits reduzierende Bedingungen, stark korrosive Bestandteile sowohl im Pyrolyse- und Produktgas als auch im Verbrennungsabgas - sehr aufwendige Werkstoffe und aufgrund möglicher Ascheerweichung ein zusätzliches, unter Umständen aufwendiges Abreinigungssystem. Die Gefahr der Ascheanbackung im Wärmetauscher setzt auch dem Betrieb und der Gestaltung der Feuerung enge Grenzen. Eine weitere Schwierigkeit besteht im Zumischen von Dampf zu den Pyrolysegasen: Entweder der Dampf wird mit großem Aufwand hoch überhitzt oder man erhält eine Absenkung der Temperatur, die zu Kondensation von Teer und damit zu Verbackungsproblemen führen kann. Schließlich sind Situationen denkbar, in denen ein definierter Wärmeübergang an das wieder aufzuheizende Wärmeträgermedium in der Feuerung nicht gewährleistet werden kann. So ist zu befürchten, daß sich der Pyrolysekoks und das Wärmeträgermedium in der Feuerung entmischen, so daß beispielsweise im Fall einer Rostfeuerung der Pyrolysekoks oben auf der Schicht abbrennt, während das Wärmeträgermedium sogar noch durch die von unten anströmende Rostluft abgekühlt wird.

Ein weiteres Verfahren, dessen Entwicklung an das in [3] dargestellte Verfahren anknüpft [4], vermeidet die oben genannten Nachteile: Der Wärmeträgerkreislauf bezieht die zweite Reaktionszone mit ein, die nun nicht mehr als Wärmetauscher, sondern als Wanderbettreaktor ausgeführt, und damit nicht mehr anfällig gegen Verschmutzungen und Anbackungen ist. Ferner wird der Pyrolysekoks nach Verlassen des Pyrolysereaktors vom Wärmeträger abgetrennt und dann verbrannt, und die dabei entstehenden, heißen Gase durch einen oberhalb der zweiten Reaktionszone befindlichen, weiteren Wanderbettreaktor geleitet. Damit wird in diesem Wanderbettreaktor eine definierte Aufheizung des Wärmeträgers erreicht. Mit diesem Verfahren sind nicht nur feste Reststoffe, sondern grundsätzlich auch flüssige und pastöse Stoffe zu vergasen. Selbst die "Vergasung", also das Reforming von gasförmigen Reststoffen, z.B. Kokereigase oder Raffneriegase, ist ohne Probleme möglich. Die meisten flüssigen bis pastösen Einsatzstoffe zeichnen sich indessen dadurch aus, daß bei deren Aufheizung auf die Temperatur der Pyrolysestufe wenig oder gar kein Pyrolysekoks anfällt, was entsprechend niedrige Aschemengen zur Folge hat. Das bedeutet, daß bei Einsatz ausschließlich solcher Stoffe die Trennung zwischen Wärmeträger und Pyrolysekoks entfallen kann. Außerdem läßt sich in dieses Verfahren die effiziente Nutzung eines katalytisch auf die Abbaureaktionen der zugeführten Kohlenwasserstoff wirkenden Stoffes nicht ohne weiteres integrieren, da eine Zudosierung zum Wärmeträger nur unzureichend mit den Schwankungen des Einsatzstoffes mit den unterschiedlichen Notwendigkeiten synchronisiert werden kann, das etwa durch den Einfluß von eingebrachten Halogen- oder Schwefelverbindungen unbrauchbar gewordene, katalytisch wirkende Material auszuschleusen und zu ersetzen, so wie es grundsätzlich das unter [1] beschriebene Verfahren ermöglicht.

Der hier beschriebenen Erfindung liegt die Aufgabe zugrunde, ein einfach durchzuführendes Verfahren zur Erzeugung eines hochwertigen, unverdünnten und heizwertreichen Produktgases aus flüssigen bis pastösen Einsatzstoffen mit geringem, apparativem und personellem Aufwand zur Verfügung zu stellen, das zum einen als wesentliche Merkmale die Erzeugung der benötigten Prozeßwärme durch separate Feuerung eines Brennstoffes, der in Ermangelung von Pyrolysekoks das erzeugte Produktgas oder auch das intermediär gebildete Pyrolysegas sein kann, sowie den Einsatz von Wärmeträgermedium zu einer gut definierten Wärmeübertragung an die Prozeßmedien beinhaltet, zum andem den Einsatz von Wirbelschichten oder Wärmetauschern mit beidseitig hoher Temperatur vermeidet, sowie den unabhängig voneinander zu steuernden Einsatz von Wärmeträger und katalytisch auf den Prozeß wirkenden Materials erlaubt.

Diese Aufgabe wird durch die Merkmalskombination des Anspruches 1 gelöst. Analog zu [4] wird der Grundgedanke weiterverfolgt, das Verfahren in drei einfach durchzuführende Verfahrensschritte aufzuteilen: Eine schnelle Pyrolyse, Gewinnung des Produktgases aus den Pyrolysegasen nach Zumischung von Prozeßdampf in homogenen Gasphasenreaktionen unter Wärmezufuhr, Erzeugung der für die Pyrolyse und die Gasphasenreaktionen benötigten Wärme durch Verbrennen eines Brennstoffs außerhalb der Pyrolyse und der nachfolgenden homogenen Gasphasenreaktion. Analog zu [4] werden die Pyrolyse und die homogenen Gasphasenreaktionen mit Hilfe von Wärmeträgermedium durchgeführt bzw. in Gang gehalten. Eine wesentliche Weiterung stellt jedoch der Gedanke dar, die zweite Reaktionszone aufzuteilen in eine Zone, in der wie in [4] das Pyrolysegas und das Reaktionsmittel durch das Wärmeträgermedium aufgeheizt wird und eine weitere Zone - fortan dritte Reaktionszone genannt -, in der das auf die angestrebte Reaktionstemperatur aufgeheizte, bereits reagierende Gemisch auf den oder die katalytisch wirkenden Feststoffe trifft und dort, wie in [1,2] beschrieben zu einem überwiegend aus Wasserstoff bestehenden Produktgas zu Ende reagiert. Da sich die Reaktionsbedingungen in der dritten Reaktionszone nicht von denen des in [1,2] dargestellten Verfahrens unterscheiden, sind bei Einsatz von Calciumoxid als katalytisch wirkendem Material die Temperaturen in dieser Zone auf 800 °C begrenzbar. Zweite und dritte Reaktionszone werden fortan "Reforming" genannt. Während des Reformings laufen die üblichen Reaktionen ab, die sich in Summe beispielhaft wie folgt zusammenfassen lassen:

CₙHₘ + n H₂O → n CO + (m/2 + n) H₂

Der katalytisch wirkende Feststoff wird bei diesem Verfahren unabhängig vom Wärmeträgermedium aufgeheizt, ohne Kontakt mit dem Wärmeträgermedium durch die dritte Reaktionszone geleitet, und schließlich über eine Abkühlungszone abgezogen, in dem er mit Luft in Kontakt gebracht wird, wobei eventuell an den Partikeln gebildeter Kohlenstoff abbrennen kann. Die hierbei vorgewärmte Luft kann bei der Prozeßwärmeerzeugung eingesetzt werden.

Eine im Sinne der Verbesserung der Produktgasqualität hilfreiche Weiterung stellt die Möglichkeit dar, dem Aufheizreaktor für den katalytisch wirkenden Feststoff eine weitere, apparativ getrennte Zone vorzuschalten, in dem eine erste Aufheizung dieses Feststoffs nicht durch Rauchgas aus der zur Gewinnung der Prozeßwärme benötigten Feuerung, sondern durch direkte Übertragung der im Produktgas enthaltenen fühlbaren Wärme erfolgt. Wird nämlich beispielsweise ein Granulat aus Calciumoxid oder Calciumhydroxid als katalytisch wirkender Feststoff eingesetzt, so kann dieser bei den sich hier einstellenden Temperaturen im Bereich von 400 - 800 °C zur Entsäuerung des Produktgases eingesetzt werden, das heißt zur Entfernung von Kohlendioxid und anderen sauren Spezies wie etwa Halogen- oder Schwelfelwasserstoffen, so daß sich die Verwendbarkeit des Produktgases als Synthesegas, Reduktionsmittel usw. deutlich verbessern läßt. Nachfolgend wird diese Zone "Entsäuerung" genannt.

Alle genannten Reaktionszonen, Pyrolyse, zweite und dritte Reaktionszone, Aufheizung von Wärmeträger und katalytisch wirkendem Stoff, Entsäuerung und Abkühlungszone, lassen sich als Schachtreaktoren ausführen, also Behälter ohne jegliche Einbauten. Voraussetzung ist der Einsatz eines grobkömigen bis feinstückigen, fließfähigen Schüttgutes als katalytisch wirkender Stoff. Eine Ausnahme ist grundsätzlich die Feuerung, wie weiter unten dargestellt. Auch beim Pyrolyseapparat kann es sich empfehlen, von dieser Vorgabe abzuweichen, wie ebenfalls weiter unten dargestellt. Eine vorteilhafte Ausgestaltung des Reformings mit der zweiten und dritten Reaktionszone besteht darin, daß diese in einem zweizügigen Reaktor durchgeführt wird, bei dem die dritte Reaktionszone im Zentrum liegt, umgeben von der zweiten Reaktionszone. Auf diese Weise wird die dritte Reaktionszone vom Wärmeträgermedium in der zweiten Reaktionszone warmgehalten.

Insgesamt zeichnet sich das Verfahren dadurch aus, daß Anbackungen infolge von möglicher Rußbildung oder anderen Crackprozessen tolerierbar sind, da wegen der Umwälzung des Wärmeträgermediums die wärmeübertragenden Oberflächen immer wieder regeneriert werden, und da der in der dritten Reaktionszone katalytisch wirkende Stoff in einfachem Durchlauf durch den Prozeß geführt wird. Eine Rückkreisung dieses Stoffes kann natürlich nach entsprechender Regeneration ins Auge gefaßt werden, sofern diese mit vertretbarem Aufwand möglich ist, oder die Kosten für diesen Stoff ein solches erfordern.

Erfindungsgemäß wird die Pyrolyse des flüssigen bis pastösen organischen Stoffes in einem Reaktor durchgeführt, der bei größtmöglicher, apparativer Einfachheit und robuster Betriebsweise den Übergang der für die Aufheizung, Trocknung und Pyrolyse notwendigen Wärme auf möglichst effektive Weise erlaubt. Da der Eingangsstoff aufgrund seiner Konsistenz sofort in die durch den eintretenden Wärmeträger gebildete Schüttung eindringt, so daß die genannten Vorgänge sehr schnell ablaufen können, kann im Gegensatz zu [4] der Pyrolysereaktor, in dem auch die zumindest teilweise Verdampfung stattfindet, einfach ausgebildet und auf den Austrag des Wärmeträgermediums hin optimiert sein. So kommt hierfür zum Beispiel ein offener Schneckentrog in Frage. Die Pyrolysetemperatur liegt vorzugsweise in einem Bereich zwischen 500 und 650 °C.

Eine Abtrennung von Pyrolysekoks aus dem Wärmeträgermedium ist nicht erforderlich, allenfalls ascheartige Bestandteile sollten an dieser Stelle ausgeschleust werden. Eine Trennung vom grobkörnigen Wärmeträger kann beispielsweise auf mechanischem Wege mit einer einfachen Siebung erfolgen. Dabei wird davon ausgegangen, daß sich der Eintrag von Festkörpern von der Größe der Wärmeträgerpartikel über den Einsatzstoff völlig vermeiden läßt. Günstig wirkt sich dabei aus, daß die Temperatur der zu trennenden Medien nur ca. 500 - 600 °C beträgt, so daß auf marktgängige Werkstoffe zurückgegriffen werden kann. Weiter bietet sich als Möglichkeit die Windsichtung an, wenn das Wärmeträgermedium eine ausreichende Dichte aufweist. Als Sichterfluid bietet sich dabei die Verbrennungsluft für die Prozeßwärmeerzeugung an, vorzugsweise allerdings aus Sicherheitsgründen ein Teilstrom zurückgekreisten Rauchgases.

Die Feuerung besteht aus einer Brennkammer mit einem stimseitigen Brenner, die beliebig angeordnet sein kann. Diese kann mit folgenden Brennstoffen betrieben werden: Produktgas, extern bezogenes Brenngas, z.B. Erdgas, Gichtgas, Koksofengas, Flüssiggas, oder einem flüssigen Brennstoff, z.B. Heizöl, Schweröl, bei Eignung auch dem zu vergasenden flüssigen, organischen Einsatzstoff. Bei Einsatz der in der Abkühlungszone aufgewärmten Luft oder des Sichtermediums zur Ascheabtrennung - sei es Luft oder zurückgeführtes Rauchgas - ist die Feuerung so zu gestalten, daß Staub nicht zu Betriebsstörungen führt, oder die Luft vorher zu filtern.

Für die Feuerung gilt noch eine weitere Randbedingung: Bei gegebener Temperatur des Reformings ist das Rauchgas am Ende der Feuerung mit einer Temperatur abzugeben, die die Wärmeverluste auf dem Wege zur Aufheizzone, die Grädigkeit der Wärmeübertragung an das Wärmeträgermedium innerhalb der Aufheizzone und die Grädigkeit des Wärmeträgers beim Wärmeübergang in der zweiten Reaktionszone während des Reformings berücksichtigt. Beträgt beispielsweise die Temperatur des Reforming 1.000 °C, dann sollte der Wärmeträger bei Eintritt in diese Zone ca. 1.050 °C heiß sein. Bei entsprechender Auslegung der Aufheizzone kann dies mit 1.075 °C heißem Rauchgas erzielt werden. Um die Verluste des Weges von der Feuerung zu dieser Aufheizzone abzudecken, muß das Abgas beim Verlassen der Feuerung etwas heißer sein, also beispielsweise 1.100 °C.

Schließlich soll noch auf die Zumischung von Prozeßdampf zu den Pyrolysegasen vor dem Reforming eingegangen werden: Diese ist dann zwingend erforderlich, wenn die flüssigen bis pastösen, organischen Eingangsstoffe kein oder nur wenig Wasser beinhalten. Die Zumischung hat im Überschuß bezüglich der zu erwartenden homogenen Gasphasenreaktionen mit Wasserdampf zu erfolgen, da nur so eine mögliche Rußbildung konsequent unterdrückt werden kann. Ein Anhaltspunkt hierfür besteht in der Einhaltung einer gewissen Wasserdampfkonzentration im frischen Produktgas, nämlich beispielsweise 25 Vol.-% oder mehr. Andererseits ist zu erwarten, daß eine Mengenregelung der Prozeßdampfzugabe mit einer Wasserdampfkonzentration als Meßgröße sehr aufwendig und teuer sein dürfte. Besser dürfte die Einstellung eines festen Wertes sein, der über eine ohnehin möglicherweise vorhandene Mengenmessung leistungsabhängig geführt wird. Eine Gestaltungsmöglichkeit des erfindungsgemäßen Verfahrens, die hier in jedem Fall erwähnt werden soll, besteht in der Wahl des Ortes der Vermischung des Prozeßdampfes mit dem Pyrolysegas. Diese muß zwar spätestens vor Eintritt in die zweite Reaktionszone, den Reformer, erfolgen, kann aber stromaufwärts in den Pyrolysereaktor und dort beliebig innerhalb des Pyrolysereaktors verlagert werden bis an dessen unteres Ende. Mit dem unteren Ende des Pyrolysereaktors ist dabei der Austritt des Gemisches aus Wärmeträgermedium und dem festen, kohlenstoffhaltigen Rückstand gemeint. Hierdurch ändert sich zwar die Aufteilung des Wärmeeinsatzes zwischen Pyrolyse und Reforming, aber letztlich ist das Spülen der Pyrolyse mit Dampf bei Dampfzugabe in der Nähe des feststoffseitigen Austritts aus dem Pyrolysereaktor in mehrerlei Hinsicht vorteilhaft: So wird die Temperatur des Pyrolysegases auf dem Weg in die zweite Reaktionszone an keiner Stelle abgesenkt, so daß nicht mit Kondensation zu rechnen ist. Außerdem wird hierdurch einer möglichen Leckage von Pyrolysegas in Richtung der Ausschleusung des Wärmeträgermediums aus dem Pyrolysereaktor vorgebeugt. Die Alternative zur Dampfzugabe ist die Zumischung von Wasser zum Eingangsstoff, sofern dieser selbst nicht ausreichend Wasser enthält. Der Vorteil hierbei ist die apparative Einfachheit, insbesondere dann, wenn die Zumischung unmittelbar vor dem Einsatz erfolgt und daher keine Anforderungen an die Stabilität einer etwaigen Emulsion zu stellen sind. Der Nachteil ist, daß die Verdampfungsenthalpie für dieses zugefügte Wasser von der exergetisch hochwertigen Wärme in der Pyrolyse bewerkstelligt wird. Optimal ist nach Erwartung eine Lösung, bei der eine Emulsion mit geringem Wasseranteil zur Verfügung gestellt, und das restliche Wasser als Dampf zugeführt wird, da so unmittelbar etwas Wasser zur Unterdrückung der Rußbildung zur Verfügung steht, bevor Dampf zugemischt werden kann. Einsatzstoffe mit hohem Wassergehalt können durch Zumischung wasserfreier oder wasserarmer Einsatzstoffe so eingestellt werden, dass sich ein für die Umsetzung günstiger Wassergehalt ergibt.

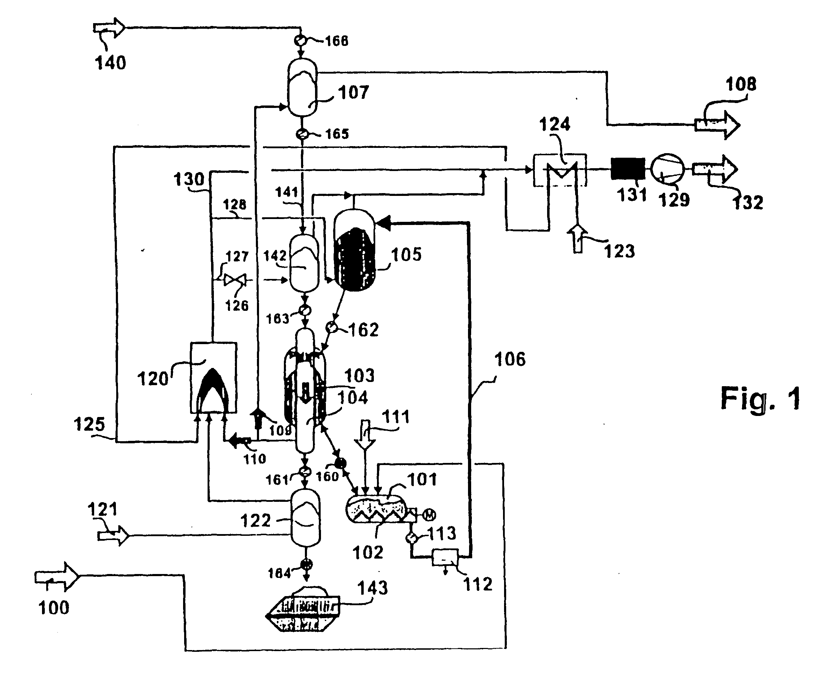

**Fig. 1** zeigt eine mögliche Ausgestaltung des Erfindungsgegenstandes. Der flüssige bis pastöse, organische Einsatzstoff **100** steht unter ausreichendem Förderdruck an, der beispielsweise über eine Förderpumpe erzeugt sein kann, und wird direkt in den Pyrolysereaktor **101** geleitet. Der Pyrolysereaktor 101 ist vorzugsweise als zylindrischer Schacht oder liegender Zylinder ausgeführt und weist einen Boden mit der Austragsvorrichtung **102** auf, die hier als Schnecke ausgeführt dargestellt ist. Neben dem Einsatzstoff fällt in den Pyrolysereaktor 101, auch das Wärmeträgermedium, von der zweiten Reaktionszone **103** des Reformers kommend, über die Schleuse **160.** Diese ist von beliebiger Bauart, vorteilhaft jedoch als Zellenradschleuse, Austragswalze (beispielsweise Bauart Rüskamp/Lufttechnik Bayreuth) oder positionierbarer Drehschieber ausgeführt, und soll nicht gasdicht sein. Außerdem tritt der Prozeßdampfstrom **111** ein, der nicht besonders spezifiziert ist und zum Beispiel ein Sattdampf niederer Temperatur sein kann.

Zunächst werde der weitere Weg der ausgetriebenen Flüchtigen beschrieben. Diese verlassen den Pyrolysereaktor 101 im Gemisch mit dem zugeführten Prozeßdampf 111 über eine separate Leitung oder besser über die Schleuse 160 im Gegenstrom zum Wärmeträger hin zum Reformer mit der zweiten Reaktionszone 103. Der Weg über die Schleuse 160 und damit der Wegfall der separaten Leitung ist dann möglich, wenn die Schleuse 160 sich permeabel ausführen läßt dergestalt, daß sie für Gas zu jeder Zeit unbeschränkt durchlässig ist, während das Wärmeträgermedium nur dosiert oder im Rahmen des Schleusvorganges getaktet hindurchtreten kann. Während nämlich das Wärmeträgermedium nur dosiert in den Pyrolysereaktor 101 eintreten darf mit der Möglichkeit, den Zufluß ganz zu unterbrechen, muß stets die gesamte Pyrolysegasmenge nebst dem zugemischten Prozeßdampf 111 ungehindert aus dem Pyrolyseapparat entweichen können. Durch eine entsprechende Gestaltung des Bodens der zweiten Reaktionszone 103 des Reformers wird der Strom der Flüchtigen aus der Pyrolyse auf einem möglichst langen Weg durch die im Reformer befindliche Schüttung aus Wärmeträgermedium geleitet. Letztere bewegt sich im Gegenstrom zu dem unter Aufheizung zu Produktgas reagierenden Gasgemisch von oben nach unten und kühlt sich dabei ab. Im oberen Teil des Reformers wird das reagierende Gasgemisch in die dritte Reaktionszone **104** des Reformers hinein umgelenkt. Die dritte Reaktionszone 104 liegt konzentrisch innerhalb der zweiten Reaktionszone 103 und ist durch eine stoffundurchlässige Wand von dieser getrennt. Innerhalb der dritten Reaktionszone fließt im Beispiel Kalk (CaO) als katalytisch wirkender Stoff im Gleichstrom mit dem reagierenden Gasgemisch nach unten. Letzteres wird in der dritten Reaktionszone 104 durch die Einwirkung des Kalks zum Produktgas umgesetzt, das heißt, daß restliche Kohlenwasserstoffe abgebaut und weiter zu den Hauptkonstituenten des Produktgases, Wasserstoff H₂ und Kohlenmonoxid CO, partiell oxidiert werden. Dieses verläßt den Reformer unten und wird aufgeteilt in den Produktgasstrom **109**, der über den Decalcinator (Entsäuerungsreaktor) **107** als abgekühlter Produktgasstrom **108** die Anlage verläßt, um gereinigt und für den Verbraucher konditioniert zu werden, sowie den Produktgas-Teilstrom **110**, der in der Brennkammer **120** zum Zweck der Erzeugung von Prozeßwärme verbrannt wird. Zuzüglich zum Decalcinator 107 kann noch ein Abhitzesystem vorgesehen werden, beispielsweise zur Erzeugung des Dampfstroms 111, dies ist jedoch hier nicht dargestellt. Die Funktion des Decalcinators ist nachfolgend erklärt.

Als katalytisch wirkender Stoff werde im dargestellten Beispiel Calciumoxid (CaO) zugeführt (**140**), der über die Schleuse **166** in den Decalcinator 107 eintritt. Hier geschieht zweierlei: Neben der Abkühlung des Produktgases, bei der das Calciumoxid Wärme aufnimmt, entzieht es dem einströmenden Produktgas 109 bei Temperaturen von 400 bis 800 °C einen Teil seines Gehaltes an Kohlendioxid (CO₂) und verbessert durch diesen Entsäuerungsprozeß die Qualität des Produktgases. Danach tritt der teilweise zu Calciumcarbonat (CaCO₃) umgewandelte Kalk über die Schleuse **165** in den Kalkvorwärmer **142** ein, wo er durch den eintretenden Heißgasstrom **127** weiter auf bis zu 1050 °C aufgeheizt und wieder teilweise unter Austreibung von CO₂ calciniert wird. Sodann tritt er über die Schleuse **163** in die dritte Reaktionszone ein, wie bereits beschrieben. Aus dieser wird er abhängig vom Bedarf über die Schleuse **161** in die als Schachtreaktor ausgeführte Abkühlungszone **122** abgezogen und dort mit dem Teilstrom **121** der in der Feuerung 120 benötigten Verbrennungsluft in Verbindung gebracht. Dadurch wird der Kalk abgekühlt, außerdem kann eventuell anhaftender Kohlenstoff abbrennen. Der erkaltete, verbrauchte Kalk wird dann über die Schleuse **164** in den Reststoffbehälter **143** abgezogen und im Verfahren zumindest unmittelbar nicht weiter verwendet. Der Verbrauch des Kalkes richtet sich unter anderem nach dem Gehalt an Schadstoffen wie Schwefel und Halogenen im Eingangsstrom 100, zum anderen nach dem angestrebten Grad der Entsäuerung und Abkühlung des Produktgases im Decalcinator 107. Im vorliegenden Beispiel wird der Kalk auf gerader Linie von oben nach unten durch den Prozeß geführt, da mit schlechtem Fließen der Kalkpartikeln gerechnet werden muß. Das Fließverhalten hängt dabei im wesentlichen von der Geometrie und der mittleren Kömgröße ab.

Im folgenden soll der Weg des Wärmeträgermediums weiter verfolgt werden. Dieses tritt durch die Austragsvorrichtung 102 und die Schleuse **113** in die Trennstufe **112** ein. Deren Wirkweise - mechanisch durch Siebung oder Sichtung - wurde bereits weiter oben beschrieben. Die abgetrennte Asche, sofern überhaupt anfallend, wird auf herkömmliche Weise ausgeschleust. Sodann wird das Wärmeträgermaterial mit Hilfe des Förderorgans **106** in den Wärmeträger-Vorwärmer **105** gefördert. Der Vorwärmer 105 als Aufheizzone für das Wärmeträgermedium ist ein einbautenloser Behälter, dessen Zustromseite für den Wärmeträger an die Beschaffenheit des Förderorgans 106 angepaßt ist. Letzteres ist auf die Aufgabe hin zu optimieren, das gewählte Wärmeträgermedium unter Minimierung von Wärmeverlusten, des mechanischen Abriebs der Wärmeträgerpartikel und des Kraftaufwandes nach oben zu transportieren. Dementsprechend kann das Förderorgan ein Becherwerk, Rohrkettenförder, pneumatischer Förderer, Kübelaufzug oder ähnliches sein. Der Vorwärmer 105 wird von unten nach oben von heißem Rauchgas **(128)** durchströmt, das den Wärmeträger von einer Temperatur, die wegen unvermeidlicher Wärmeverluste unterhalb der Austrittstemperatur der Pyrolyse liegt und als "Sockeltemperatur" bezeichnet werden soll, auf bis zu 1.050 °C erwärmt. Der aufgeheizte Wärmeträger wird an der Unterseite des Vorwärmers über die weitest möglich gasdichte Schleuse **162** dosiert in die zweite Aufheizzone 103 des Reformers abgezogen. Analog zu dem Weg des Kalks verläuft der des Wärmeträgers durch den Vorwärmer 105, die Schleuse 162, die zweite Aufheizzone 103, den Schleusapparat 160 und den Pyrolysereaktor 101 von oben nach unten ohne nennenswerte horizontale Anteile, so daß hier die Förderung über Schwerkraft erfolgen kann.

Zuletzt werde noch die Prozeßwärmeerzeugung mit dem zugehörigen Abgasweg beschrieben: Die hier zylindrisch gewählte, aufrecht stehende und von unten befeuerte Brennkammer 120 wird im gewählten Beispiel vom Produktgas-Teilstrom 110, dem bereits erwähnten Luftstrom 121, sowie dem ergänzenden Luftstrom **125** gespeist. Letzterer wird aus dem Frischluftstrom **123** im Luftvorwärmer (LUVO) **124** durch Aufheizung erzeugt. Der Luftüberschuß der Verbrennung wird dabei so eingestellt, daß die Abgasströme **127** und 128 eine Temperatur aufgeprägt erhalten, die einerseits geeignet ist, Kalk und Wärmeträger auf bis zu 1.050 °C aufzuheizen, andererseits aber noch keine Materialprobleme hervorzurufen. Der zur Aufheizung des Kalks benötigte Abgasstrom 127 ist mit Hilfe des Drosselorgans **126** bedarfsgerecht einzustellen. Der Abgasstrom 128 dient zur Aufheizung des Wärmeträgers und kann nicht gedrosselt werden. Die Förderung des Abgases übemimmt das Saugzuggebläse **129.** Die Umfahrung **130** der beiden Vorwärmer erlaubt den Einsatz der Brennkammer 120 als Sicherheitsorgan, ist aber für den Normalbetrieb ohne Bedeutung.

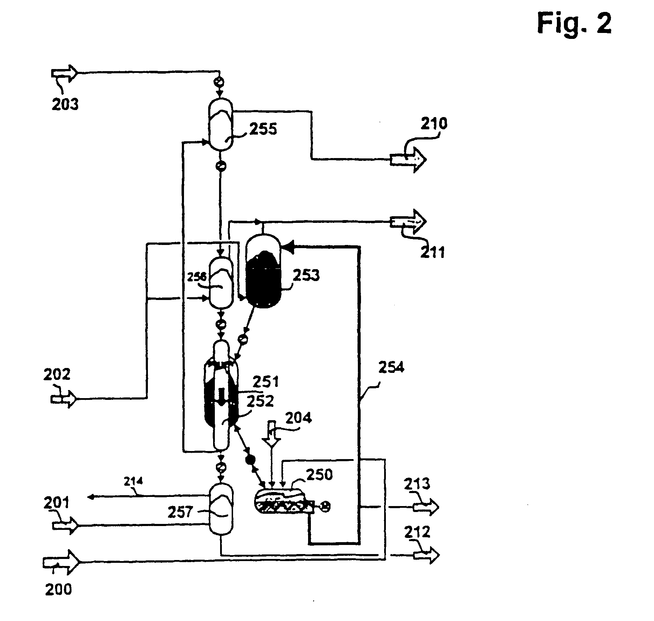

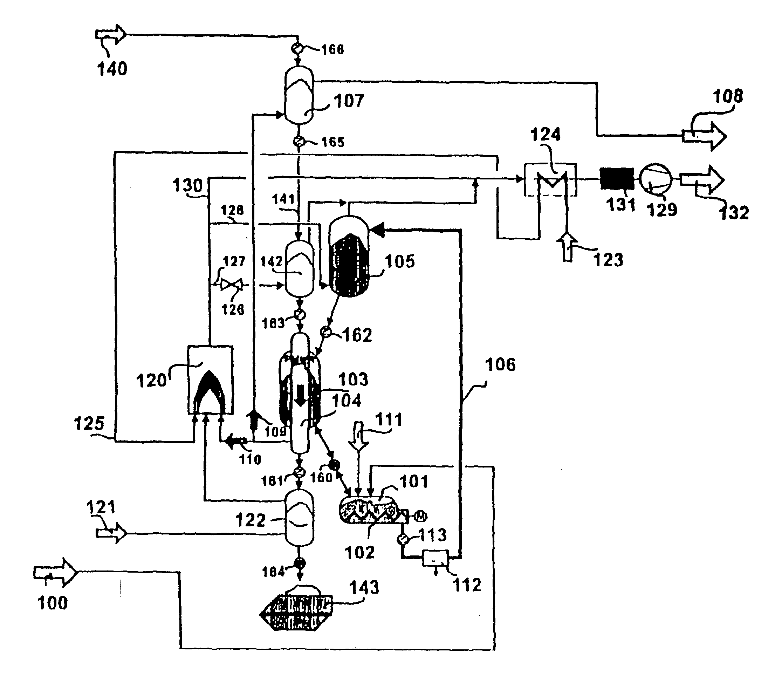

Das Abgas verläßt die Vorwärmer 105 und 142 mit einer geringfügig über der Sockeltemperatur liegenden Temperatur. In der Regel ist die Abgasmenge deutlich größer als die des Produktgases. Folglich ist die Nutzung der Abwärme des Abgases nach Verlassen des Vorwärmers hier dringend geboten. Dies geschieht bevorzugt durch Vorwärmung der Verbrennungsluft im Luftvorwärmer (LUVO) 124, da auf diese Weise die zurückgewonnene Wärme nach der Verbrennung wieder exergetisch nutzbar oberhalb der Sockeltemperatur von ca. 500 °C wieder zur Verfügung steht. Diese Art der Wärmeverschiebung ist auf dem Wege der Dampferzeugung nicht oder nur mit unverhältnismäßig großem Aufwand darstellbar. Nach dem LUVO 124 verläßt der gesamte Rauchgasstrom über die abhängig vom Einsatzstoff und den gültigen Emissionsbegrenzungen zu konfigurierende und in ihrer Wirkungsweise an sich bekannte Reinigungsstufe **131** und das Saugzuggebläse **129** die Anlage. Das gereinigte Abgas **132** wird in der Regel in die Umgebung abgegeben, wobei ein Teilstrom - hier nicht dargestellt - in die Feuerung 120 zwecks besserer Temperaturführung zurückgeführt werden kann. Während Fig. 1 beispielhaft die schematische Anordnung einer autark arbeitenden Anlage zeigt, geht es in **Fig. 2** darum zu zeigen, wie die Minimalkonfiguration einer erfindungsgemäßen Anlage in einen übergeordneten Gesamtprozeß eingebunden sein kann, das heißt, welche ein- und ausgehenden Ströme eine solche Anlage minimal aufweist.

**Fig. 2** zeigt vereinfacht den verfahrenstechnischen Kern der Anlage mit den bei Fig. 1 bereits hinreichend beschriebenen Komponenten, hier im Bild wie folgt bezeichnet: Pyrolyseapparat **250,** Reformer mit der zweiten Aufheizzone **251** und der dritten Aufheizzone **252,** in der reagierendes Gasgemisch und katalytisch wirkendes Material (beispielsweise Kalk) in Kontakt gebracht werden, Aufheizzone für das Wärmeträgermedium **253,** Wärmeträgerkreislauf **254,** Decalcinator **255,** Vorwärmer **256** und Abkühlungszone **257** für das katalytisch aktive Medium. Dies sind die für das erfindungsgemäße Verfahren mit den Merkmalen des Hauptanspruches 1, was die Abkühlungszone 257 betrifft, des Anspruches 2, was den Decalcinator 255 betrifft, des Anspruches 3, die wesentlichen Komponenten. Für den Einsatzstoff **200** gilt das bereits genannte Kriterium, daß er unter ausreichendem Vordruck zur Verfügung stehen muß. Das bedeutet, daß er aus einem Werksnetz, aber auch aus einer geeigneten Zuführstation herangeführt werden kann, was aber für das Verfahren unerheblich ist. Entsprechendes gilt für die Kühlluft **201.** Die aufgewärmte, abströmende Luft **214** kann beliebig weiter verwendet werden. Der Einsatz in der Feuerung zur Erzeugung von Prozeßwärme wie in Fig. 1 beschrieben dient nur der energetischen Optimierung des Gesamtprozesses, ist aber nicht zwingend. Genauso wenig ist die Erzeugung des Heißgases **202** aus einem Teilstrom Produktgas zwingend. Befindet sich die Anlage nach dem erfindungsgemäßen Verfahren in einem Stahlwerk, so kann das Heißgas 202 Heißwind sein. Genauso ist die Verwendung eines Teilstromes eines vorhandenen Rauchgases mit entsprechender Temperatur denkbar, oder die Erzeugung des Heißgases aus einem Brennstoff, der weder dem Einsatzstoff 200 noch dem Produktgas oder einem intermediären Zustand zwischen Pyrolyse- und Produktgas entspricht. An das zuzuführende, katalytisch wirkende Material 203 ist lediglich die zusätzliche Anforderung zu stellen, daß es feinstückig mit möglichst einheitlicher Stückgröße vorliegt, so daß der Druckverlust in den Apparaten 252, 256 und 257 möglichst gering gehalten wird.

Das Produktgas **210** muß nicht in jedem Fall gereinigt und gekühlt werden, selbst die Entsäuerung im Decalcinator 255 ist nicht obligatorisch, wenn nämlich beispielsweise der CO₂-Gehalt des Produktgases 210 nicht stört, wie etwa bei der Verbrennung in einer Gasturbine. Das Abgas **211** aus dem Heißgas 202 kann in einer anlageneigenen Reinigungsstufe aufbereitet, einem übergeordneten Rauchgasbehandlungssystem zugegeben oder, falls 202 ein Heißwind ist, einem anderen Prozeß beispielsweise als vorgewärmte Verbrennungsluft zugegeben werden. Der in Fig. 1 gezeigte LUVO dient lediglich zur energetischen Optimierung einer allein stehenden Anlage.

Schließlich ergibt sich die Verwendung des verbrauchten, katalytisch wirkenden Materials **212** und der Asche **213** aus der Qualität des Eingangsstoffes 200 und der Einbettung der Anlage in eine vorhandene Infrastruktur.

### Ausführungsbeispiel

In der Vorrichtung gemäß Figur 1 werden 286 kg/h einer Emulsion mit 30% Wassergehalt, d.h. 200 kg/h organische Phase vergast. Die organische Phase bestehe im wesentlichen aus 84,5 % Kohlenstoff, 15 % Wasserstoff, 0,3 % Stickstoff, sowie geringen Mengen an Chlor und Schwefel. Der untere Heizwert betrage 40,0 MJ/kg in wasserfreiem Zustand. Die thermische Vergaserleistung betrage folglich 2.224 kW. Die Pyrolyse werde bei 550 °C und das Reforming mit Wasserdampf bei 950 °C durchgeführt. Der Arbeitsdruck sei Atmosphärendruck.
Als Wärmeträgermedium werden Stahlkugeln mit einer Komgröße von ca. 10 mm verwendet. Das Wärmeträgermedium werde zunächst von 500 auf 950 °C aufgeheizt. Aufgrund der erforderlichen Wärmeleistung von 632 kW für die Pyrolyse und das Reforming, sowie zur Abdeckung von Wärmeverlusten betrage die Umlaufmenge des Wärmeträgermediums 12.600 kg/h, also das 44-fache der Menge an Emulsion. Zusätzlich wird Kalk in einer Menge eingesetzt, die es theoretisch erlaubt, das Produktgas vollständig zu entsäuem, das heißt, alles entstandene CO₂, sowie alle schwefel- und chlorhaltigen Spezies an den Kalk zu binden. Der erfindungsgemäße Einsatz des Kalks in der dritten Reaktionszone, also im Reformer, als katalytisch aktives Material ist jedoch nicht von einem quantifizierbaren Verbrauch begleitet. Im genannten Beispiel werden theoretisch 7,42 kmollh CaO benötigt, also 416 kg/h, aus denen im wesentlichen 741 kg/h CaCO₃ entstehen. Die fühlbare Wärme dieses Reststoffs verbleibt nahezu vollständig im Prozeß.

Der Pyrolysereaktor ist ein oben geschlossener Trog mit einem Rauminhalt von ca. 0,25 m³, so daß dem pyrolysierenden Wanderbett eine Verweilzeit von 10 Minuten sicher zur Verfügung stehe. In der Pyrolyse werde die Emulsion komplett in die Gasphase überführt und an den Reformer abgegeben. Die Reformierung laufe bei 950 °C in einer Wärmeträgerschüttung und einer Kalkschüttung von jeweils 0,9 m lichter, zylindrischer Höhe ab, wobei die Kalkschüttung etwa 1,1 m lichten Durchmesser, die Wärmeträgerschüttung etwa 1,6 m lichten Außendurchmesser und 1,1 m lichten Innendurchmesser aufweist, so daß eine Gasverweilzeit von 0,5 sec je Reaktionszone sicher eingehalten werden. Damit wird folgendes Produktgas erhalten:

| | |
|---|---|
| Heizwert: | 10,99 MJ/kg, trocken |
| Wasserstoff: | 72,2 Vol.-% tr. |
| Kohlenmonoxid: | 23,7 Vol.-% tr. |
| Methan: | 2,4 Vol.-% tr. |
| Kohlendioxid: | 1,4 Vol.-% tr. |
| Wasserdampf: | 28,0 Vol.-% |
| Menge: | 848 Nm³/h |
| Chem. Enthalpiestrom: | 1908 kW |

Bei dieser Menge ist bereits berücksichtigt, daß eine dem Enthalpiestrom von 849 kW entsprechende Menge Produktgas der gleichen Zusammensetzung in die Feuerung abgezogen wurde. Damit wird die Wärme für Reforming, Pyrolyse, Abwassereindampfung aus der Produktgaskühlung und Abdeckung der Wärmeverluste erzeugt und die in der Feuerung benötigte Verbrennungsluft auf 350 °C aufgeheizt. Der Feuerungswirkungsgrad beträgt 80 %, der Abgasverlust beträgt folglich 170 kW. Die fühlbare Wärme des Produktgases beträgt 338 kW. womit etwa 292 kg/h eines Sattdampfes mit niedrigem Druck erzeugt werden können, wovon 280 kg/h als Prozeßdampf im Refcrming benötigt werden, während der Rest anderweitig verwendet werden kann.
[1] PCT-OS WO99/04861
[2] Th.-M. Sonntag, DGMK-Tagungsbericht 2000-1 (ISBN 3-931850-65-X), 57-64
[3] DE-PS 197 55693
[4] T. Dimova, C. Schmid, H.-J. Mühlen, DGMK-Tagungsbericht 2000-1 (ISBN 3-931850-65-X), 39-46.

## Patentansprüche

1. Verfahren zur Vergasung von flüssigen bis pastösen, organischen Stoffen und Stoffgemischen, bei dem die organischen Stoffe in einem Pyrolysereaktor durch Kontakt mit einem heißen Wärmeträgermedium im wesentlichen in eine flüchtige Phase überführt werden, die flüchtige Phase nach möglicher Zumischung eines Reaktionsmittels wie Wasserdampf in einer zweiten Reaktionszone durch Wärmeaustausch derart nacherhitzt wird, daß ein Produktgas mit hohem Heizwert erhalten wird, und ein Strom eines heißen Gases unter Abkühlung zur Aufheizung des Wärmeträgermediums genutzt wird,
**dadurch gekennzeichnet, daß**
a) das Wärmeträgermedium nach Verlassen des Pyrolysereaktors von einem festen, kohlenstoffhaltigen Rückstand der Pyrolyse in einer Trennstufe abgeschieden und in eine Aufheizzone gefördert wird,
b) die heißen Abgase der Feuerung in der Aufheizzone durch eine Schüttung des Wärmeträgermediums geführt werden, wobei sie einen großen Teil ihrer fühlbaren Wärme an das Wärmeträgermedium abgeben,
c) das aufgeheizte Wärmeträgermedium aus der Aufheizzone in die als Wanderbettreaktor ausgeführte, zweite Reaktionszone abgezogen wird, wo es das Gemisch aus Pyrolysegasen und Reaktionsmittel aufheizt und mindestens teilweise in das Produktgas umwandelt,
d) das Wärmeträgermedium nach Durchtritt durch die zweite Reaktionszone wieder dem Pyrolysereaktor zugeführt wird,
e) das aufgeheizte und teilreagierte Gasgemisch nach der zweiten Reaktionszone in eine dritte Reaktionszone geführt wird, in der es mit einem auf Reaktionstemperatur aufgeheizten katalytisch aktiven, vom Wärmeträger verschiedenen Material zum Produktgas ausreagiert.

2. Verfahren nach Anspruch 1, **dadurch gekennzeichnet, daß** das katalytisch aktive Material unter Erwärmung von Verbrennungsluft abgekühlt und danach ausgeschleust und entweder verworfen oder nach Regeneration wieder eingesetzt wird.

3. Verfahren nach einem der Ansprüche 1 und 2, **dadurch gekennzeichnet, daß** das katalytisch wirkende Material durch die fühlbare Wärme des Produktgases aufgeheizt wird und dabei mit wenigstens einer Spezies des Produktgases chemisch reagiert.

4. Verfahren nach einem der Ansprüche 1 bis 3, **dadurch gekennzeichnet, daß** das Wärmeträgermedium und das katalytisch wirkende Material getrennt voneinander aufgeheizt und durch den Prozeß geführt werden.

5. Verfahren nach einem der Ansprüche 1 bis 4, **dadurch gekennzeichnet, daß** das katalytisch wirkende Material durch einen heißen Gasstrom, insbesondere Abgas, aufgeheizt wird.

6. Verfahren nach einem der Ansprüche 1 bis 5, **dadurch gekennzeichnet, daß** wenigstens einer der beiden Ströme Wärmeträger und katalytisch wirkendes Material in zwei voneinander getrennten, hintereinander oder parallel angeordneten Prozeßstufen durch Produktgas und durch einen heißen Gasstrom, insbesondere Abgas, aufgeheizt wird.

7. Verfahren nach einem der Ansprüche 1 bis 6, **dadurch gekennzeichnet, daß** die Trennung des Wärmeträgermediums von vorhandenem festen Rückstand nach Verlassen des Pyrolysereaktors mechanisch über eine ein- oder mehrstufige Siebung erfolgt.

8. Verfahren nach einem der Ansprüche 1 bis 7, **dadurch gekennzeichnet, daß** die Trennung des Wärmeträgermediums von dem festen, kohlenstoffhaltigen Rückstand nach Verlassen des Pyrolysereaktors pneumatisch mit Hilfe der Windsichtung erfolgt.

9. Verfahren nach einem der Ansprüche 1 bis 8, **dadurch gekennzeichnet, daß** die Förderung wenigstens eines der folgenden Medien diskontinuierlich oder schubweise erfolgt: organischer Stoff, Wärmeträgermedium, Gemisch aus Wärmeträgermedium und festem Rückstand der Pyrolyse bei Verlassen des Pyrolysereaktors, katalytisch wirkendes Material.

10. Verfahren nach einem der Ansprüche 1 bis 9, **dadurch gekennzeichnet, daß** die fühlbare Wärme des Produktgases und des Abgases der Feuerung wenigstens teilweise zur Erzeugung des Wasserdampfes als Reaktionsmittel oder zur Luftvorwärmung für die Feuerung benutzt wird.

11. Verfahren nach einem der Ansprüche 1 bis 10, **dadurch gekennzeichnet, daß** die fühlbare Wärme des Produktgases und des Abgases der Feuerung wenigstens teilweise zur Aufheizung des organischen, flüssigen bis pastösen Stoffes direkt oder indirekt genutzt wird.

12. Verfahren nach einem der Ansprüche 1 bis 11, **dadurch gekennzeichnet, daß** als Wärmeträgermedium ein feinstückiges oder granulatförmiges, festes Material gewählt wird, daß unter den im Wechsel durchlaufenen Reaktionsbedingungen seine Eigenschaften im wesentlichen beibehält.

13. Verfahren nach einem der Ansprüche 1 bis 12, **dadurch gekennzeichnet, daß** als katalytisch wirkendes Material ein Metalloxid, insbesondere Calciumoxid, gewählt wird.

14. Verfahren nach einem der Ansprüche 1 bis 13, **dadurch gekennzeichnet, daß** das vor der zweiten Reaktionszone zuzumischende Reaktionsmittel an einer beliebigen Stelle in den Pyrolysereaktor gegeben wird.

15. Verfahren nach einem der Ansprüche 1 bis 14, **dadurch gekennzeichnet, daß** die dem Wärmeträger zuzuführende Wärme einer Feuerung entstammt und der Aufheizzone in Form von heißem Abgas zugeführt wird.

16. Verfahren nach einem der Ansprüche 1 bis 15, **dadurch gekennzeichnet, daß** zum Aufheizen des Wärmeträgers ein Brennstoff oder ein Brennstoffgemisch eingesetzt wird, das wenigstens teilweise aus organischem, flüssigem bis pastösem Einsatzstoff oder einem an irgendeiner Stelle innerhalb des Verfahrensablaufes aus diesem erzeugten Stoff oder einem seiner Folgeprodukte gebildet wird.

17. Verfahren nach einem der Ansprüche 1 bis 16, **dadurch gekennzeichnet, daß** das Produktgas abgekühlt, und das dabei entstehende Kondensat gegebenenfalls gereinigt und zur Erzeugung des Prozeßdampfes wiederverwendet oder der Feuerung oder dem Wärmeträgermedium zum Zweck der Eindampfung und Verbrennung der darin enthaltenen, verbrennlichen Anteile zugegeben wird.

## Claims

1. A method of gasifying liquid to pasty organic substances and substance mixtures, in which the organic substances are substantially converted into a volatile phase in a pyrolysis reactor by contact with a hot heat-carrier medium, the volatile phase after possible admixing of a reactant such as steam is post-heated in a second reaction zone by heat exchange in such a way that a product gas with a high calorific value is obtained, and a flow of a hot gas is used with cooling thereof to heat the heat-carrier medium,
**characterised in that**
a) the heat-carrier medium after leaving the pyrolysis reactor is separated from a solid carbonaceous pyrolysis residue in a separation stage and conveyed into a heating zone,
b) the hot waste gases from the firing operation in the heating zone are passed through a bed of the heat-carrier medium, in which case they give off a large part of their sensible heat to the heat-carrier medium,
c) the heated heat-carrier medium is drawn off from the heating zone into the second reaction zone which is in the form of a travelling bed reactor, where it heats the mixture of pyrolysis gases and reactant and at least partially converts it into the product gas,
d) the heat-carrier medium after passing through the second reaction zone is fed to the pyrolysis reactor again, and
e) the heated and partially reacted gas mixture after the second reaction zone is passed into a third reaction zone in which it reacts fully with a catalytically active material which is different from the heat-carrier medium and which has been heated to reaction temperature to afford the product gas.

2. A method according to claim 1 **characterised in that** the catalytically active material is cooled with heating of combustion air and is thereafter discharged and either discarded or used again after regeneration.

3. A method according to one of claims 1 and 2 **characterised in that** the catalytically acting material is heated by the sensible heat of the product gas and **in that** case chemically reacts with at least one species of the product gas.

4. A method according to one of claims 1 to 3 **characterised in that** the heat-carrier medium and the catalytically acting material are heated and passed through the process separately from each other.

5. A method according to one of claims 1 to 4 **characterised in that** the catalytically acting material is heated by a hot gas flow, in particular waste gas.

6. A method according to one of claims 1 to 5 **characterised in that** at least one of the two flows of heat-carrier medium and catalytically acting material is heated in two mutually separate process stages which are arranged in succession or in parallel relationship, by product gas and by a hot gas flow, in particular waste gas.

7. A method according to one of claims 1 to 6 **characterised in that** separation of the heat-carrier medium from solid residue which is present is effected after leaving the pyrolysis reactor mechanically by way of a single-stage or multi-stage sieving operation.

8. A method according to one of claims 1 to 7 **characterised in that** separation of the heat-carrier medium from the solid carbonaceous residue is effected after leaving the pyrolysis reactor pneumatically by means of air sifting.

9. A method according to one of claims 1 to 8 **characterised in that** conveying of at least one of the following media is effected discontinuously or batch-wise: organic substance, heat-carrier medium, mixture of heat-carrier medium and solid residue from the pyrolysis operation when leaving the pyrolysis reactor, and catalytically acting material.

10. A method according to one of claims 1 to 9 **characterised in that** the sensible heat of the product gas and of the waste gas from the firing operation is used at least in part for producing the steam as a reactant or for air preheating for the firing operation.

11. A method according to one of claims 1 to 10 **characterised in that** the sensible heat of the product gas and of the waste gas from the firing operation is used at least in part directly or indirectly for heating the organic liquid to pasty substance.

12. A method according to one of claims 1 to 11 **characterised in that** the heat-carrier medium adopted is a fine-piece or granular solid material which substantially retains its properties under the reaction conditions through which it alternately passes.

13. A method according to one of claims 1 to 12 **characterised in that** a metal oxide, in particular calcium oxide, is selected as the catalytically acting material.

14. A method according to one of claims 1 to 13 **characterised in that** the reactant which is to be admixed upstream of the second reaction zone is passed into the pyrolysis reactor at any location.

15. A method according to one of claims 1 to 14 **characterised in that** the heat to be fed to the heat carrier originates from a firing operation and is fed to the heating zone in the form of hot waste gas.

16. A method according to one of claims 1 to 15 **characterised in that** the step of heating the heat carrier is effected by using a fuel or a fuel mixture which is at least partially formed from organic liquid to pasty charge substance or a substance produced therefrom at any location within the method procedure or one of its subsequent products.

17. A method according to one of claims 1 to 16 **characterised in that** the product gas is cooled down and the condensate formed **in that** situation is optionally purified and reused to produce the process steam or is added to the firing operation or to the heat-carrier medium for the purposes of evaporation and combustion of the combustible components contained therein.

## Revendications

1. Procédé pour la gazéification de matières organiques fluides à pâteuses et mélanges de matières, où les matières organiques sont conduites dans un réacteur de pyrolyse par contact avec un fluide chaud de transfert de chaleur essentiellement en phase liquide, la phase liquide est ensuite chauffée, après mélange éventuel d'un fluide de réaction avec de la vapeur d'eau dans une deuxième zone de réaction par échange de chaleur, de façon qu'un gaz produit de fort pouvoir calorique puisse être obtenu et un courant d'un gaz chaud est utilisé, par son refroidissement, pour le chauffage du fluide de transfert de chaleur, **caractérisé en ce que**:
a) le fluide de transfert de chaleur, après avoir quitté le réacteur de pyrolyse, est séparé d'un résidu solide de la pyrolyse contenant du carbone dans un étage de séparation et est fourni à une zone de chauffage,
b) les gaz chauds d'échappement de la combustion sont conduits dans la zone de chauffage par une distribution du fluide de transfert de chaleur, ce par quoi ils donnent une grande partie de leur chaleur sensible au fluide de transfert de chaleur,
c) le fluide de transfert de chaleur chauffé extrait de la zone de chauffage est attiré dans une seconde zone de réaction réalisée en réacteur à lit mobile où il chauffe le mélange de gaz de pyrolyse et de fluide de réaction et le transforme au moins partiellement en le gaz produit,
d) le fluide de transfert de chaleur, après avoir traversé la deuxième zone de réaction, est de nouveau conduit au réacteur de pyrolyse,
e) le mélange de gaz chauffé et ayant partiellement réagi, après la deuxième zone de réaction, est conduit à une troisième zone de réaction dans laquelle il est mis à réagir avec une matière différente du fluide de transfert de chaleur, catalytiquement active, chauffée à la température de réaction, en un gaz produit.

2. Procédé selon la revendication 1, **caractérisé en ce que** la matière catalytiquement active est refroidie par chauffage de l'air de combustion et est ensuite évacuée et soit jetée ou de nouveau utilisée après régénération.

3. Procédé selon l'une quelconque des revendications 1 et 2, **caractérisé en ce que** la matière à action catalytique est chauffée par la chaleur sensible du gaz produit et, en outre, réagit chimiquement avec au moins une espèce du gaz produit.

4. Procédé selon l'une quelconque des revendications 1 à 3, **caractérisé en ce que** le fluide de transfert de chaleur et la matière à action catalytique sont chauffés séparément l'un de l'autre et conduits à travers le procédé.

5. Procédé selon l'une quelconque des revendications 1 à 4, **caractérisé en ce que** la matière à action catalytique est chauffée par un courant de gaz chauffé, en particulier des gaz d'échappement.

6. Procédé selon l'une quelconque des revendications 1 à 5, **caractérisé en ce qu'**au moins l'un des deux fluide de transfert de chaleur et matière à action catalytique est chauffé dans deux étages du procédé séparés l'un de l'autre, agencés l'un derrière l'autre ou parallèlement, par le gaz produit et par un courant de gaz chaud, en particulier gaz d'échappement.

7. Procédé selon l'une quelconque des revendications 1 à 6, **caractérisé en ce que** la séparation du fluide de transfert de chaleur et du résidu solide qui est présent se produit mécaniquement après sortie du réacteur de pyrolyse au moyen d'un tamisage à un ou plusieurs étages.

8. Procédé selon l'une quelconque des revendications 1 à 7, **caractérisé en ce que** la séparation du fluide de transfert de chaleur et du résidu solide contenant du carbone s'effectue pneumatiquement après avoir quitté le réacteur de pyrolyse au moyen d'une aspiration d'air.

9. Procédé selon l'une quelconque des revendications 1 à 8, **caractérisé en ce que** la fourniture d'au moins l'un des fluides qui suivent se produit de façon discontinue ou par lots: matières organiques, fluide de transfert de chaleur, mélange du fluide de transfert de chaleur et du résidu solide de la pyrolyse à la sortie du réacteur de pyrolyse, matière à action catalytique.

10. Procédé selon l'une quelconque des revendications 1 à 9, **caractérisé en ce que** la chaleur sensible du gaz produit et des gaz d'échappement de la combustion est utilisée au moins partiellement pour la production de vapeur d'eau en tant qu'agent de réaction ou pour le préchauffage de l'air pour la combustion.

11. Procédé selon l'une quelconque des revendications 1 à 10, **caractérisé en ce que** la chaleur sensible du gaz produit et des gaz d'échappement de la combustion est utilisée au moins partiellement pour chauffer la matière organique fluide à pâteuse, directement ou indirectement.

12. Procédé selon l'une quelconque des revendications 1 à 11, **caractérisé en ce qu'**en tant que fluide de transfert de chaleur, on choisit une matière solide à grains fins ou granulaire qui conserve, dans les conditions de réaction se présentant pendant l'échange, ses propriétés.

13. Procédé selon l'une quelconque des revendications 1 à 12, **caractérisé en ce qu'**en tant que matière à action catalytique, on choisit un oxyde de métal, en particulier de l'oxyde de calcium.

14. Procédé selon l'une quelconque des revendications 1 à 13, **caractérisé en ce que** le milieu réactionnel à mélanger avant la deuxième zone de réaction est donné en un emplacement choisi dans le réacteur de pyrolyse.

15. Procédé selon l'une quelconque des revendications 1 à 14, **caractérisé en ce que** la chaleur conduite à l'agent de transfert de chaleur provient d'une combustion et est conduite à la zone de chauffe sous la forme de gaz chauds d'échappement.

16. Procédé selon l'une quelconque des revendications 1 à 15, **caractérisé en ce que**, pour chauffer le fluide de transfert de chaleur, un combustible ou un mélange de combustibles est utilisé qui est formé au moins partiellement d'une matière organique, liquide à pâteuse ou bien d'une matière produite en un point quelconque à l'intérieur du cours du procédé ou bien de ses produit subséquents.

17. Procédé selon l'une quelconque des revendications 1 à 16, **caractérisé en ce que** le gaz produit est refroidi et que le condensât qui en résulte est, le cas échéant purifié et à nouveau utilisé pour la production de la vapeur du procédé, ou bien donné pour la combustion ou le fluide de transfert de chaleur en vue de la concentration par évaporation et de la combustion de la partie combustible qui y est contenue.
